# EUROPEAN PATENT APPLICATION

(11) **EP 4 823 182 A1**
(43) Date of publication of application: **14.10.2026**
(21) Application number: 25169483.2
(22) Date of filing: 09.04.2025
(51) Int. Cl.: H04W 40/02, H04W 40/24

(54) **OPERATING A NODE EMBODIED AS A GATEWAY IN A MOBILE 3GPP COMMUNICATION NETWORK**

(71) Applicant: Siemens Aktiengesellschaft, 80333 München (DE)
(72) Inventor: Walewski, Joachim, 82008 Unterhaching (DE); Walpurgis, Lars, 90475 Nürnberg (DE)
(74) Representative: Siemens Patent Attorneys

(57) **Abstract**

Operating a node embodied as a gateway in a mobile 3GPP communication network

The proposed embodiments refer to a node in a mobile 3GPP communication system, acting as a router or firewall. In one embodiment, the node includes one or more user equipment. It also includes one or more protocol data unit session anchors for interfacing the network node with at least one data network, an intermediate user plane function for receiving and forwarding data packets between the user equipment and the protocol data unit session anchors according to a ruleset, and a session management function for providing the ruleset to the intermediate user plane function. The ruleset is established according to a routing protocol and can be amended by routers within the data network.

## Description

### Technical Field

The disclosed embodiments pertain to the field of industrial nodes in 3GPP communication network. More specifically, the disclosed embodiments relate to a and industrial communication node embodied as a gateway in a mobile 3GPP communication network.

### Background Art

A growing requirement of contemporary manufacturing is an increasing demand for wireless data exchange. Mobile networks are designed to support various industrial services such as cloud-based services, industrial control, and autonomous driving. Fifth generation (5G) wireless networks, along with emerging successor technologies like 6G within the 3GPP communication framework, are transforming industries by providing ultra-reliable, low-latency communication and extensive device connectivity. These advancements facilitate real-time data processing, automation, and enhanced operational efficiency across sectors such as manufacturing, logistics, and healthcare.

User equipment (UE) in 3GPP communication network typically serves as an end-user device connecting to the wireless network. It communicates with the network through a base station, transmitting and receiving data to enable high-speed internet access, voice calls, and other services. User equipment or UE may, however, also act as a gateway for interconnecting various devices and/or networks. Gateways may facilitate communication between local devices and external networks, manage data traffic, and ensure secure data flow.

An example of such gateways is the industrial device series SCALANCE MUM offered by the applicant. Industrial gateways or routers of said series may support wired or wireless IP (Internet Protocol) communication for Ethernet-based applications via public and private 5G networks and further facilitate communication between local devices and external networks, manage data traffic, and ensure secure data flow. Industrial gateways may provide connectivity to applications on devices within one or more capillary networks - such as those used for networking production cells or sensor networks - attached to the gateway. In the context of industrial networks, a capillary network may refer to a local network using short-range radio-access technologies to connect various devices and sensors. Capillary networks may be particularly useful in industrial settings as they provide local wireless connectivity, enabling communication within a confined area. They may connect to cellular networks through industrial gateways as referenced above, allowing devices with short-range radios to access global connectivity. Capillary networks support a wide range of applications, including Automated Guided Vehicles (AGVs) equipped with onboard networks to adapt flexibly to changing production demands by ensuring reliable communication and seamless integration within the production environment. The industrial device series SCALANCE MUM may play a pivotal role in the development of the Internet of Things or loT by bridging a gap between local wireless sensor networks, or capillary networks in general, and a broader cellular infrastructure.

When utilizing wired or wireless user equipment (UE) according to 3GPP communication standards for telecommunication as a gateway, it is important to manage traffic between the capillary network and the data network beyond - or »north of« - the gateway.

Accordingly, there is a need in the art to develop more efficient traffic control mechanisms that align with 3GPP standards while ensuring adherence to traffic management or network security policies.

### Summary of the Invention

The present embodiments facilitate an operation of an industrial node in a 3GPP mobile communication network acting as a gateway and implementing traffic management policies.

According to one embodiment, a node in a mobile 3GPP communication system embodied as a gateway is provided, the node including:
- one or more user equipment (UE) connected with at least one application;
- one or more protocol data unit session anchors (PSA) for interfacing the network node with at least one data network (DN);
- an intermediate user plane function (UPF) for receiving and/or forwarding data packets from said data packets between said user equipment (UE) and/or between said protocol data unit session anchors (PSA) in accordance with at least one ruleset consisting of one or more packet detection rules and/or or forwarding action rules;
- a session management function (SMF) for providing the at least one ruleset to the intermediate user plane function (UPF); and;
- wherein the at least one ruleset is established in accordance with a routing protocol and configured to be amended by one or more routers within the data network in accordance with the routing protocol.

In accordance with this embodiment, the node itself integrates the functionalities of a router within its traffic management policies, rather than connecting to an external router. The proposed router facilitates dynamic routing, enabling the 3GPP communication system and external networks to adaptively respond to network changes, including the loss of one or more connections interfacing with a connected network.

According to another embodiment pertaining to a second group of embodiments, the node has the additional features of:
- the session management function (SMF) being configured for implementing one or more 3GPP virtual networks each 3GPP virtual network comprising a virtual network set including at least one of said at least one user equipment (UE) and at least one of said at least one data network (DN) whereby communication is restricted between members of said virtual network set;
- the session management function (SMF) being configured to utilize filter rules to enable communication between members of different 3GPP virtual networks;

In accordance with this embodiment, the node functions as a firewall, managing traffic for industrial nodes and employing »soft« filtering to facilitate communication between different 5G Virtual Network (5G-VN) sets. The filter rules are stored within the session management function. The node, specifically its session management function, may identify user equipment and data networks using internal 5G-VN Group IDs or Generic Public Subscription Identifiers (GPSI). The firewall enforces specific traffic management rules. Unlike traditional filtering, which relies on fixed rules, soft filtering offers flexible and adjustable rules offering fine-grained traffic control. For instance, a firewall may block HTTP (Hypertext Transfer Protocol) packets while allowing HTTPS (Hypertext Transfer Protocol Secure) packets to pass through.

According to another embodiment pertaining to a third group of embodiments, the node has the additional features of:
- the user equipment providing a User Equipment Route Selection Policy causing the user equipment to inspect an incoming frame and to determine handling and forwarding of the frame within the node in accordance with at least one Route Selection Policy Rule;
- the User Equipment Route Selection Policy including a route selection component instructing the user equipment to discard the frame; and;
- the user equipment being configured to receive an incoming frame, check an applicability of the route selection component for discarding the frame and, if applicable, discard the received incoming frame.

In accordance with this embodiment, the user equipment of the node is augmented with firewall capabilities to scrutinize incoming frames and decide their processing and forwarding. By locally enforcing traffic management policies, the burden on the core 3GPP network for traffic control is alleviated.

### Brief Description of the Drawing

The objects as well as further advantages of the present invention will become more apparent and readily appreciated from the following description of the preferred embodiments, taken in conjunction with the accompanying drawing of which:
- FIG. 1: illustrates a schematic diagram of functional units participating in a 3GPP communication system according to a first constellation; and;
- Fig. 2: illustrates a schematic diagram of functional units participating in a 3GPP communication system according to a second constellation.

### Description of Examples

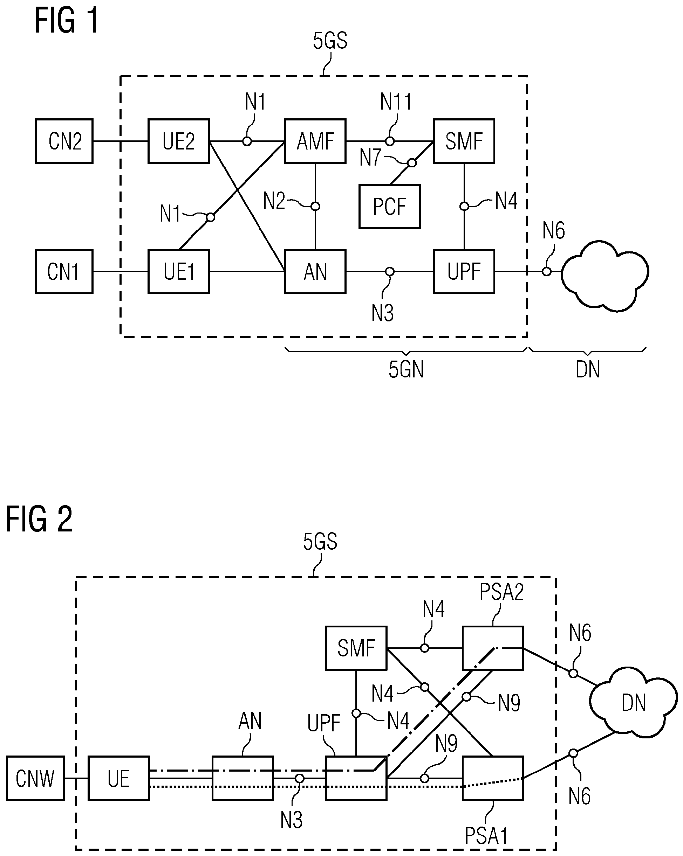

FIG. 1 illustrates a schematic diagram of a mobile 3GPP communication network 5GN in an environment including further networks DN, CN1, CN2. A dashed box 5GS outlines the boundary of the mobile 3GPP communication system 5GS, which may be hereinafter also referred to as 5G system. Entities depicted within the dashed box may be integral components of the 5G system. The 5G system encompasses both a user plane and a control plane, which, although not explicitly depicted in the drawing, are briefly elucidated below.

The control plane may be responsible for managing signaling and control information required to establish and maintain network connections. The control plane may primarily be represented by an access and mobility management function AMF, a session management function SMF, and a policy control function PCF. The session management function SMF may be responsible for managing sessions and interactions with a user plane function UPF, which is part of the user plane explained below rather than the control plane. The session management function SMF may be responsible for creating, updating, and terminating Protocol Data Unit or PDU sessions.

The user plane may be responsible for the actual transmission of user data. The user plane may handle forwarding of data frames between a user equipment UE and external networks CN1, CN2 or applications or services being executed on network devices or nodes - not shown - within the external networks. The external networks may include industrial networks such as production cell networks, sensor networks or capillary networks. The data network DN may refers to an external network or service that the 5G network 5GN connects to. The data network DN may usually include a corporate industrial network allowing industrial devices and applications to communicate with each other and with external services, or a specialized network used for industrial applications.

A central component of the user plane is its user plane function UPF, which may perform a number of tasks, including frame or packet routing and forwarding, Quality of Service (QoS) management, and packet inspection. In some embodiments, more than one user plane function UPF may be instantiated by the control plane.

FIG. 1 further illustrates a series of reference points, with their reference sign arranged along lines connecting various rectangular-shaped functional units within the communication system 5GS. These reference points are briefly elucidated below:
- A first reference point N1 manages non-access stratum signaling - i.e. signaling protocols and procedures that support the control and management of the user equipment, independent of the radio access network - between the user equipment UE and the access and mobility management function AMF for handling registration, connection, and session management.
- A second reference point N2 serves as the control plane interface between the access network AN and the mobility management function AMF.
- A third second reference point N3 provides user plane connectivity between the access network AN and the user plane function UPF.
- A seventh reference point N7 links the session management function SMF to the policy control function PCF for enforcing policies related to various network functions including traffic management and other network behaviors.
- An eleventh reference point N11 connects the access and mobility management function AMF to the session management function SMF for managing tasks such as creating, updating, and terminating protocol data unit PDU sessions.

The 3GPP communication network 5GN may support transport of IP packets from one or both user equipment UE1, UE2 to the data network DN or from a user equipment UE1 to another user equipment UE2. All traffic may be directed to and from the user plane function UPF, which may serve as a protocol data unit or PDU session anchor or PSA. The role of the PSA refers the user plane function UPF that terminates the N6 interface of a PDU session within a 5G core network. Although a present user plane function UPF acting as a PSA may embody some functions of a router, one important router function that the UPF currently lacks is dynamic routing.

The lack of support for dynamic routing has such significant impacts that, with current means, no node in a mobile 3GPP communication system may operate as a gateway according to a routing protocol or, in other words, as a networked router. The lack of support for dynamic routing is explained below in the context of a known procedure entitled Selective Traffic Routing, highlighting how the absence of dynamic routing components leads to an incomplete technical solution using Selective Traffic Routing.

FIG. 2 illustrates a 5GS communication system with a user equipment UE connected to a capillary network CNW, which differs from FIG.1 in that, in addition to the user plane function UPF, two additional user plane functions are instantiated, each acting as a protocol data unit session anchor PSA1, PSA2. The user plane function UPF is an intermediate user plane function UPF for receiving and/or forwarding data packets from the user equipment UE and/or between the protocol data unit session anchors PSA1, PSA2 in accordance with at least one ruleset consisting of one or more packet detection rules and/or or forwarding action rules.

In the following, Selective Traffic Routing may be implemented according to clause 5.6.4 of the technical specification 3GPP TS 23.501 V19.1.0 (2024-09) as edited by the 3rd Generation Partnership Project Technical Specification, version 19.1.0, published in September 2024, hereinafter referred to as the '501 specification.

According to the '501 specification, Selective Traffic Routing may utilize Uplink Classifiers or UL CL for dividing traffic - symbolized in the drawing by two dotted or dashed curves - based on predefined packet detection rules and forwarding action rule. One Packet Detection Rule may be implemented to detect Real-time Transport Protocol or RTP traffic - which is usually delivered on port number 5004 - and the corresponding Forwarding Action Rule may be implemented to direct such RTP traffic - symbolized by the upper the upper dashed curve - to the N6 interface of the second unit session anchor PSA 2.

Another pair of Packet Detection Rules (PDR) and Forwarding Action Rules (FAR) may stipulate that all other traffic shall be directed to the N6 interface via the first unit session anchor PSA 1. However, in the event of a link failure, such as a failure of a - not shown - switch assigned to the second unit session anchor PSA2 for interfacing the data network DN, Real-time Transport Protocol or RTP traffic would be lost. Under such circumstances, it would be beneficial if the intermediate user plane function UPF could dynamically re-route the RTP traffic via the first unit session anchor PSA 1. Such dynamic re-routing is currently not feasible with the provisions of the '501 specification or other 3GPP methodologies.

The present embodiments suggest implementing a routing protocol within the session management function SMF utilizing Packet Detection Rules (PDR) and Forwarding Action Rules (FAR) derived from these routing protocols to determine actions or within the 3GPP communication network. The session management function SMF may provide a routing table. The session management function SMF may prepare at minimum PDRs and FARs based on its routing tables.

One or more PDR/FAR pairs - i.e. pairs consisting of a packet detection rule PDR and a forwarding action rule FAR - may embody a rule to forward incoming routing control packets to the corresponding session management function SMF. The session management function SMF may take actions based on the received routing control packet. An example action is to update the packet detection rules PDR and forwarding action rules FARs in the pertinent user plane function UPF.

If the routes within the 3GPP communication system 5GS have changed, the session management function SMF may send routing control messages to external routers via one or more protocol data unit session anchor PSA1, PSA2.

According to an advantageous embodiment, the session management function (SMF) for provision of at least one ruleset to the intermediate user plane function (UPF) may be implemented by utilizing a policy control function PCF. According to this embodiment, the policy control function PCF may contain one or many pre-defined routing tables, which may be polled by the session management function SMF when a new PDU Session is set up. To this end, a new PCF Information Element may be defined. Alternatively or additionally, the policy and charging control rules may be expanded in accordance with methods delineated in technical specification 3GPP TS 29.512 V18.8.0 (2025-01) as edited by the 3rd Generation Partnership Project Technical Specification, version 18.8.0, published in January 2025, which details the session management policy control service for the 5G System (5GS) at Stage 3. This 3GPP technical specification is hereinafter referred to as the '512 specification.

According to a supplementary embodiment, the routing tables may be configured or maintained by OAM, i.e. a system-wide instance for operation, administration and maintenance of the 3GPP communication system 5GS.

According to a supplementary embodiment, one or more routing tables administered in the policy control function PCF may be configured by an external application function via a network exposure function or NEF of the 3GPP communication system 5GS in accordance with methods delineated in clause 6.2.5 of the '501 specification and/or in accordance with a technical specification 3GPP TS 29.522 V17.16.0 (2025-01) as edited by the 3rd Generation Partnership Project Technical Specification, version 17.16.0, published in January 2025, which is hereinafter referred to as the '522 specification. Said '522 specification describes network exposure function northbound application program interfaces or API for the 5G System 5GS.

According to an advantageous embodiment, the session management function SMF may support one or more routing protocols, for instance the RIP or Routing Information Protocol, the OSF or Open Shortest Path First, utilizing a distance-vector algorithm to determine the best path based on hop count; the OSPF, implementing a link-state protocol utilizing the shortest path first algorithm to determine the best path based on the cost of each link; the EIGRP or Enhanced Interior Gateway Routing Protocol, being a hybrid protocol combining features of distance-vector and link-state protocols and using metrics like bandwidth and delay to determine the best path; the BGP Border Gateway Protocol being an exterior gateway protocol used to exchange routing information between autonomous systems on the internet, focusing on path vector attributes; and/or the IS-IS or Intermediate System to Intermediate System, being a link-state protocol similar to OSPF but with different operational characteristics.

According to an advantageous embodiment, the session management function SMF may support the Virtual Router Redundancy Protocol or VRRP enhancing network reliability by automatically assigning available routers to participating hosts. This protocol may be commonly utilized to ensure continuous availability by dynamically electing a master router to handle traffic, thereby providing seamless failover in case of router failure. According to a more specific embodiment, VRRP may be utilized for selective traffic routing, allowing specific types of traffic to be directed through designated communication system-internal paths - i.e. paths inside the 3GPP communication system 5GS - for dynamically adapting previously static paths that were implemented inside the inside the 3GPP communication system 5GS by Selective Traffic Routing.

According to an advantageous embodiment, the session management function SMF may configure the packet detection rules PDR and Quality of Service Enforcement Rules or QER in one or more user plane functions so that routing protocol messages may be mapped onto Quality of Service or QoS Flows with a high priority. For instance, a packet detection rule PDR may include a rule for detecting IP packets with protocol number 89 - being assigned to the OSPF or Open Shortest Path First routing protocol - mapping these packets onto a high-priority QoS Flow by setting an appropriate priority value in the QER. This mapping may be performed in accordance with Table 5.8.2.11.4-1 of the '501 specification with the objective of assigning high priority within communication system-internal paths during heavy traffic in order to prevent packet loss.

According to an advantageous embodiment, the access network AN shown in FIG. 1 and FIG. 2 is a fixed network. This clarification may appear surprising, given the commonplace assumption that 3GPP communication networks are intrinsically mobile. However, the predominant wireless nature of these communication networks and its user equipment is not binding and does not preclude the realization of 3GPP communication networks as fixed networks. An exemplary embodiment is detailed in the technical specification 3GPP TS 23.316 V18.6.0 (2024-09), as edited by the 3rd Generation Partnership Project Technical Specification, version 18.6.0, published in September 2024, which details wireless and wireline convergence access support for the 5G System (5GS) and provides guidelines for integrating wireless and wireline networks within the 5G framework. This 3GPP technical specification is hereinafter referred to as the '316 specification.

According to an advantageous embodiment, the 3GPP communication network may support non-3GPP connections, for instance according to clause 4.2.8 of the '501 specification.

According to an advantageous embodiment, the 3GPP communication network may support Access Traffic Steering, Switching and Splitting, for instance according to clause 4.2.10 and/or clause 5.32 of the '501 specification.

In summary, the embodiments described above pertain to a node in a mobile 3GPP system that serves as a gateway. The node manages data packet routing through an intermediate user plane function UPF and a session management function SMF. It establishes session rules based on routing protocols, which can be dynamically amended by routers within the data network.

Hereinafter, a second group of embodiments for a node in a mobile 3GPP communication system, embodied as a gateway, is disclosed. These embodiments may be implemented independently or in conjunction with the embodiments described above. For the sake of clarity, these embodiments are presented independently in the following. Of course, the embodiments disclosed hereinafter may be combined with one or more features of the aforementioned embodiments, as deemed appropriate by a person skilled in the art and suitably tailored to the use case application.

Referring again to FIG. 1, the following disclosure will continue to elaborate on a node in a mobile 3GPP communication system embodied as a gateway or more specifically as a firewall.

As already explained above, 3GPP communication systems may support a transport of IP packets and/or Ethernet frames from a user equipment UE1, UE2 to a data network DN or from a user equipment UE1 to another user equipment UE2. In the latter case, the traffic flows from a user equipment UE1 to a user plane function UPF acting as PDU session anchor or PSA - i.e. the user plane function UPF which may terminate the N6 interface of a PDU session within a 5G core network - or from the user plane function UPF acting as PDU session anchor to the other user equipment UE2.

In the following, a use case is considered where the two capillary networks CN1, CN2 of FIG. 1 are interconnecting - not shown - communication partners within two respective - not shown - production cells in a manufacturing environment. Gateways terminating the respective capillary networks CN1, CN2 are, from a perspective of the 3GPP system 5GS, embodied as node in a mobile 3GPP communication system 5GS with one or more user equipment UE1, UE2 connected with at least one - not shown - application configured for the capillary network CN1, CN2. The respective gateway may, for example, be implemented in the form of an industrial device from the SCALANCE MUM series as offered by the applicant, such as a type SCALANCE MUM853-1s from the aforementioned series.

The gateways may logically terminate the respective capillary networks CN1, CN2 with respect to a higher-level network, for example a factory network. If FIG. 1 is rotated 90° counterclockwise, the representation corresponds to the hierarchical depiction of a network hierarchy in a factory or manufacturing facility. In this context, the data network DN may represent a higher-level network, such as the factory network, while the capillary networks CN1 and CN2 correspond to a lower-level manufacturing hierarchy. It is customary to qualify the direction towards higher-level networks as northbound and the direction towards lower-level networks as southbound.

Network policies for factories may adhere to a security zone concept which implies a presence of firewall at the boundary of each production cell. For a deployment conforming to FIG. 1, this would mean that inbound and outbound communication from the capillary networks CN1, CN2 should be restricted by a firewall. The firewall would need to be positioned somewhere between an endpoint of the capillary networks CN1, CN2 and the user equipment UE1, UE2, which actually are intended to form exactly these endpoints. However, with the current means, this is not feasible. Moreover, as current 3GPP communication systems are neither designed nor adaptable to support firewall functionality, this may result in additional challenges, especially for intra-UE communication, such as between the first user equipment UE1 and the second user equipment UE2.

A potential approach to address the aforementioned challenges in implementing a security zone concept could involve the use of a 5G Virtual Network or 5G VN, as described in clause 5.8.2.13 of the '501 specification. A 5G VN may consist of a set of user equipment (UE) and a data network. One of the features of 5G VNs is that they only allow communication between set members. For instance, if there were one 5G VN for a first production cell covered by the first capillary network CN1 and another 5G VN for a second production cell covered by the second capillary network CN2, the second user equipment UE2 being assigned to the second production cell could not communicate with the first user equipment UE1 in the first production cell. A 5G VN set according to this approach would thus be conceptualized as being surrounded by an impenetrable cell boundary. From a factory-automation point of view, this approach may be too extreme: although the security zone concept typically involves blocking some traffic between zones, completely blocking all traffic is typically not required.

Accordingly, there is a need in the art to develop more efficient traffic control mechanisms that align with 3GPP standards while ensuring adherence to traffic management or network security policies.

The proposed embodiments as described in the following second group of embodiments, facilitate an operation of an industrial node in a 3GPP mobile communication network acting as a gateway and implementing traffic management policies.

According to an embodiment, a node in a mobile 3GPP communication system embodied as a firewall is provided, the node including:
- one or more user equipment (UE) connected with at least one application configured for a capillary network (CN1, CN2);
- one or more user plane functions (UPF) for interfacing the network node with at least one data network (DN);
- a session management function (SMF) for implementing one or more 3GPP virtual networks each 3GPP virtual network comprising a virtual network set including at least one of said at least one user equipment (UE) and at least one of said at least one data network (DN) whereby communication is restricted between members of said virtual network set;
- the session management function (SMF) being configured to utilize filter rules to enable communication between members of different 3GPP virtual networks;

According to an embodiment, the above-described concept of a 5G Virtual Network 5G VN may be amended with »soft« filtering capabilities between 5G-VN sets. For this inter-5G-VN filter lists may be created and stored in the session management function SMF. These lists may contain filter rules. The membership of the data network to one or several 5G-VN sets may be indicated by internal 5G-VN Group IDs - for example according to clause 5.29.2 of the '501
specification - and the Data Network Name. The membership of specific user equipment UE1, UE2 to one or several 5G-VN groups may be indicated by one or more internal 5G-VN Group ID and/or a Generic Public Subscription Identifier or GPSI of a user equipment. An overview of related data types may be found in clause 6.1.6 of technical specification 3GPP TS 29.502 V19.2.0 (2025-03) as edited by the 3rd Generation Partnership Project Technical Specification, version 19.2.0, published in March 2025, which is hereinafter referred to as the '502 specification. In summary, the session management function (SMF) according to this embodiment may utilize filter rules to enable communication between members of the 5G Virtual Network sets.

According to an embodiment, the session management function SMF may verify whether user equipment UE1, UE2 or the data network DN included in a protocol data unit or PDU session are members of a 5G-VN set which is covered or governed by the filter rules. This verification may be advantageously made upon initialization of the protocol data unit session.

If the session management function SMF verifies that user equipment UE1, UE2 or the at least one data network DN included in the PDU session are member of a 5G-VN set covered by the filter rules, the session management function SMF may at least infer packet detection rules PDR and related forwarding action rules or FAR for inter-5G-VN communication from the filter rules. The session management function SMF may include said rules in the PFCP or Packet Forwarding Control Protocol Session Establishment Procedure, e.g. according to clause 6.3.2 of technical specification 3GPP TS 29.244 V19.1.0 (2015-03) as edited by the 3rd Generation Partnership Project Technical Specification, version 19.1.0, published in March 2015 and hereinafter referred to as the '244 specification.

As current user plane function UPF Information Elements, including packet detection rules or PDR, do not yet contain a Generic Public Subscription Identifier or GPSI of user equipment, the session management function SMF may infer suitable parameters from its session database to identify user equipment in these UPF Information Elements. An example of such a parameter is the Core Network Tunnel Information, as detailed in table 5.8.5.3-1 of the '501 specification.

If forwarding of frames or packets to another 5G-VN set is permitted, the forwarding mechanisms outlined in clause 5.8.2.13 of the '501 specification may be applied. If forwarding is not permitted, the frame or packet may be dropped.

Additionally, methods according to this embodiment may be utilized for protocol data unit sessions that exclusively connect a User Equipment UE1, UE2 with one or more PDU session anchors or PSA. In such cases, the 5G-VN Group ID in the filter rules may be set to a default value, indicating a none-5G VN Group. Further details on the Group ID are stated in table 5.3.2-1 of a technical specification 3GPP TS 29.571 V19.2.0 (2025-03) as edited by the 3rd Generation Partnership Project Technical Specification, version 19.2.0, published in March 2025, hereinafter referred to as the '571 specification. The relevant User Plane Function UPF Information Elements, including at minimum the packet detection rules PDR and forwarding action rules or FAR, may specify the handling of traffic from the user equipment UE1, UE2 to the data network and vice versa.

According to an embodiment, if the stored filter rules are incomplete, the session management function SMF may supplement them. For instance, if the filter rules identify the security zones not with Generic Public Subscription Identifiers or GPSI but with source and/or destination addresses, the session management function SMF may infer the GPSI from its own session database, the Access and Mobility Management Function (AMF), and/or the subscription database.

According to an embodiment, if a new Protocol Data Unit or PDU session is created, the session management function SMF may check whether Information Elements for already existing PDU sessions are to be updated. If yes, the session management function SMF may direct an update utilizing the Packet Forwarding Control Protocol or PFCP Session Modification Procedure according to clause 6.3.3 of the '244 specification.

According to an embodiment, the session management function SMF logs which filter rules are embodied in which active PDU sessions.

According to an embodiment, the user plane function UPF may provide reports to the session management function SMF so that the session management function SMF may collate firewall logs, such as event logs and session logs. Pertinent events may include frame or packet forwarding between 5G-VN sets and dropping of frames/packets that were meant to be forwarded between 5G-VN sets.

According to an embodiment, the filter rules may be stored in a Unified Data Repository or UDR. Filter rules may alternatively or additionally be stored in the Policy Control Function PCF.

According to an embodiment, the filter rules may be stored in Policy and Charging Control rules. These rules according to table 4.1.4.2.1-1 of the '512 specification may be extended with 5G-VN-set Information Elements according to clause 5.29.2 of the '501 specification.

According to an embodiment, filter rules in the Policy Control Function or PCF may be amended via the Network Exposure Function or NEF. The Network Exposure Function or NEF may be implemented according to clause 6.2.5 of the '501 specification in conjunction with the '522 specification.

According to an embodiment, filter rules may be stored in the session management function SMF and/or the Policy Control Function or PCF via Operations, Administration, and Maintenance or OAM.

According to an embodiment, the Access Network AN may be a Radio Access Network or RAN. Additionally, the Access Network AN may be a wired network as specified in the 3GPP TS 23.316 specification. Furthermore, the Access Network AN may encompass or include a non-3GPP network.

In summary, embodiments according to the second group of embodiments as explained above pertain to a node in a mobile 3GPP communication system embodied as a gateway or more specifically as a firewall managing traffic and acting as a gateway for industrial nodes using »soft« filtering capabilities to facilitate communication between different 5G Virtual Network (5G-VN) sets. The filter rules may be stored in the session management function SMF. The firewall or, more specifically, the session management function (SMF) of the node in a mobile 3GPP communication system embodied as a firewall, may identify user equipment and data networks using internal 5G-VN Group IDs and/or Generic Public Subscription Identifiers or GPSI. The firewall may apply specific rules for traffic management. Unlike traditional filtering capabilities relying on rigid and static rules, soft filtering capabilities allow for adaptable and configurable rules that can be updated in response to current network conditions and requirements.

Hereinafter, a third group of embodiments for a node in a mobile 3GPP communication system, embodied as a gateway, is disclosed. These embodiments may be implemented independently or in conjunction with one or more of the embodiments described above. For the sake of clarity, these embodiments are presented independently in the following. Of course, the embodiments disclosed hereinafter may be combined with one or more features of the aforementioned embodiments, as deemed appropriate by a person skilled in the art and suitably tailored to the use case application.

In 3GPP communication systems, user equipment or UE typically refer to a wireless transceiver terminating the wireless devices like smartphones or laptops. However, user equipment is increasingly part of gateways, such as the SCALANCE MUM series. These gateways may connect applications on devices within a capillary network, which is a smaller network connected to a main user equipment.

In the realm of factory automation, it may be essential to regulate data traffic originating from user equipment to the 3GPP communication network. For instance, if plain Hypertext Transfer Protocol (HTTP) traffic is prohibited beyond or »south« of the connected user equipment and/or within the data network DN, the 3GPP communication system may have to ensure that such traffic is not forwarded. While traffic control mechanisms may be implemented within the 3GPP core network - such as utilizing a node embodied as a firewall according to the second group of embodiments explained above - this approach may lead to inefficient utilization of radio resources as packets transmitted from the UE to the 3GPP communication network may ultimately be discarded due to firewall rules.

Accordingly, there is a need in the art to implement traffic control mechanisms closer to the capillary network or an application running on the 5G-enable device, thereby alleviating the burden on core instances of the 3GPP communication network for network-wide management of traffic control measures.

The proposed embodiments as described in the following third group of embodiments facilitate an operation of an industrial node in a 3GPP mobile communication network acting as a gateway and locally implementing traffic management policies.

According to an embodiment, a node in a mobile 3GPP communication system embodied as a gateway is provided, the node including at least one user equipment (UE) being connected with at least one application configured for a capillary network (CN1, CN2),
- the user equipment providing a User Equipment Route Selection Policy causing the user equipment to inspect an incoming frame and to determine handling and forwarding of the frame within the node in accordance with at least one Route Selection Policy Rule;
- the User Equipment Route Selection Policy including a route selection component instructing the user equipment to discard the frame; and;
- the user equipment being configured to receive an incoming frame, check the applicability of the route selection component for discarding the frame and, if applicable, discard the received incoming frame.

When traffic enters the user equipment from the capillary network or the app running on the 5G-enabled device, the user equipment may check whether one or more URSP rules - User Equipment Route Selection Policy - are applicable. URSP rules help the user equipment determine what type of protocol data unit or PDU session is needed for the incoming traffic. If no suitable PDU session is found, the user equipment may request the 3GPP network to establish a suitable PDU Session, to which the UE is registered.

User Equipment Route Selection Policy or URSP is detailed in clause 6.6.2 of the technical specification 3GPP TS 24.526 V19.1.0 (2024-12). This specification, edited by the 3rd Generation Partnership Project and published in December 2024, will be referred to as the '526 specification. The URSP enables user equipment to choose suitable PDU Sessions based on predefined criteria. To this end, the traffic is matched against so-called traffic descriptors according to table 6.6.2.1-2 of the technical specification 3GPP TS 23.503 V19.1.0 (2024-09) as edited by the 3rd Generation Partnership Project Technical Specification, version 19.1.0, published in September 2024, which is hereinafter referred to as the '503 specification, and clause 5.2 of the '526 specification. Descriptors are combined in URSP rules. URSP rules may describe the capabilities of matching PDU Sessions. These capabilities are referred to as Route Selection Descriptors.

An overview below shows two examples of URSP rules. Each of the two rows describes a URSP rule based on Table A-1 of the '503 specification.

| UE Route Selection Policy rule | | Discussion |
|---|---|---|
| Rule Precedence = 1 | Route Selection Descriptor Precedence = 1 | This URSP rule associates the traffic in VLAN 500 with Ethernet 3GPP access and the 'PROFINET production cell 1' Data Network. |
| Traffic Descriptor: 802.1Q C-TAG VLAN ID = 500 | PDU Session Type Policy: Ethernet | This rule enforces the following routing policy: The traffic in VLAN 500 shall be transferred over an Ethernet PDU Session with Data Network Name = 'PROFINET production cell 1' over 3GPP access. If this PDU Session is not already established, the UE shall attempt to establish a pertinent Ethernet PDU Session. |
| | Data Network Name Selection: 'PROFINET production cell 1' | |
| | Access Type preference: 3GPP access | |

| UE Route Selection Policy rule | | Discussion |
|---|---|---|
| Rule Precedence = lowest priority | Route Selection Descriptor Precedence = 1 | This URSP rule associates all traffic not matching any prior rule with the 'enterprise' Data Network Name. |
| Traffic Descriptor: * | Data Network Name Selection: 'enterprise' | This rule enforces the following routing policy: all traffic not matching any prior rule shall be transferred over a PDU session to Data Network Name = 'enterprise' with no access network preference. |

The second rule having a Rule Precedence of »lowest priority« may be a default URSP rule. User equipment may only have one default rule in its active UE Route Selection Policy list and there may be only one route selection rule in this rule.

According to this embodiment it is proposed to add a new route selection component to Table 6.6.2.1-3 of route selection descriptors in the '503 specification. The amendment involves adding an additional row with an information name »Block« as shown below:

| Information name | Description | Category | PCF permitted to modify in URSP | Scope |
|---|---|---|---|---|
| Route Selection Descriptor Precedence | Determines the order in which the Route Selection Descriptors are to be applied. | Mandatory (NOTE 1) | Yes | UE context |
| Route selection components | *This part defines the route selection components* | Mandatory (NOTE 2) | | |
| | | | | |
| Block | String; value: "yes" or "no" (NOTE 11) | Optional | Yes | UE context |
| | | | | |
| SSC Mode Selection | One single value of SSC mode. (NOTE 5) | Optional | Yes | UE context |

The new route selection component stands for discarding or dropping a frame or packet. This new component can, for instance be called »Block«. When a frame or packet matches this route selection component, the user equipment does not look for an existing matching PDU Session nor does the user equipment request a suitable PDU Session from the 3GPP network.

Discarding this frame at the sole discretion of the user equipment advantageously ensures that no resources in the 3GPP communication network are utilized beyond local processing.

It is further proposed to add an eleventh note to Table 6.6.2.1-3 of route selection descriptors in the '503 specification according to the following:
NOTE 11: Block = "yes" implies that the matched traffic will not be forwarded to the 5G Network to which the UE is registered. Block = "no" indicates that traffic forwarding is permitted.

This embodiment may advantageously be implemented directly in the user equipment acting as a gateway. While industrial gateways, such as those from the SCALANCE MUM series, may act as a firewall, they do so only when the firewall is implemented outside the user equipment. By integrating the firewall function within the user equipment, the proposed embodiment may significantly simplify design and operation of industrial gateways. The user equipment firewall is advantageously capable of handling rules for OSI layers two and above at the same time. This means the user equipment can manage and enforce security policies for data link layer traffic as well as higher layers, such as network and transport layers. Additionally, the user equipment firewall may advantageously control and manage traffic that is forwarded by its operating system. This capability allows the user equipment to apply security measures and routing decisions directly, without relying on external network components. As a result, the user equipment may ensure efficient and secure traffic handling within the local environment.

According to an embodiment, no new route selection component is defined for »Block«. Instead, the Access Type preference in Table 6.6.2.1-3 is extended with a suitable option, such as »none«.

According to an embodiment, no new route selection component is defined for »Block«. Instead, the Data Network Name in Table 6.6.2.1-3 is extended with a suitable option, such as »none«.

According to an embodiment, the user equipment may send a report to the 3GPP Network when a »Block« URSP rule is enforced and/or when at least one URSP rule indicates that reports are to be sent, e.g. is specified in a row »Indication for reporting URSP rule enforcement« in Table 6.6.2.1-2 of the '503 specification. The URSP rule enforcement reports may be structured in accordance with clause 4.2.4 of the '526 specification.

According to an embodiment, the user equipment may not only prevent establishing a new PDU session but additionally terminating matching PDU sessions.

According to an embodiment, the user equipment may to the sender reply with an IP (Internet Protocol) Control Message if an IP packet has triggered the »Block« URSP rule. Message examples may include »Destination Host Administratively Prohibited« and »Host Unreachable for Type of Service«.

According to an embodiment, a 5G Mobile Termination may inform a 5G Terminal Equipment about the enforcement of a »Block« URSP rule. To this end, a new AT command may be defined in accordance with the technical specification 3GPP TS 27.007 V19.2.0 (2025-03) as edited by the 3rd Generation Partnership Project Technical Specification, version 19.2.0, published in March 2025.

According to an embodiment, the user equipment may report the enforcement of a »Block« URSP rule to the operating system of the user equipment, if the triggering frame or packet was forwarded to or from said operating system.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A node in a mobile 3GPP communication system embodied as a gateway, the node including:
- one or more user equipment (UE) connected with at least one application;
- one or more protocol data unit session anchors (PSA) for interfacing the network node with at least one data network (DN);
- an intermediate user plane function (UPF) for receiving and/or forwarding data packets of said data packets between said user equipment (UE) and/or between said protocol data unit session anchors (PSA) in accordance with at least one ruleset consisting of one or more packet detection rules and/or or forwarding action rules;
- a session management function (SMF) for providing the at least one ruleset to the intermediate user plane function (UPF); and;
- wherein the at least one ruleset is established in accordance with a routing protocol and configured to be amended by one or more routers within the data network in accordance with the routing protocol.

2. The node according to claim 1, wherein the routing protocol is configured to determine an optimized path for routing data packets between routers until said data packets have reached their destination.

3. The node according to one of the aforementioned claims, wherein the at least one application is an application configured for a capillary network (CN1, CN2).

4. The node according to one of the aforementioned claims, the session management function (SMF) being configured for generating or deleting packet detection rules and/or forwarding action rules amending the at least one ruleset in reaction to routing protocol messages received by said one or more routers outside the network node

5. The node according to claim 4, wherein said routing protocol messages include data pertaining to one or more of a path selection, packet forwarding, network topology, and/or route advertisements.

6. The node according to one of the aforementioned claims, the session management function (SMF) being configured to maintain and update a routing table for storing information about network paths and destinations.

7. The node according to one of the aforementioned claims, wherein:
- the session management function (SMF) being configured for implementing one or more 3GPP virtual networks each 3GPP virtual network comprising a virtual network set including at least one of said at least one user equipment (UE) and at least one of said at least one data network (DN) whereby communication is restricted between members of said virtual network set;
- the session management function (SMF) being configured to utilize filter rules to enable communication between members of different 3GPP virtual networks;

8. The node according to claim 7, the session management function (SMF) being configured to verify whether a user equipment (UE) and/or a data network (DN) included in a protocol data unit session is member of a virtual network being covered by said filter rules.

9. The node according to claim 8, wherein the step of verification whether a user equipment (UE) and/or a data network (DN) included in a protocol data unit session is a member of a virtual network being covered by said filter rules is made upon initialization of the protocol data unit session.

10. The node according to one of the aforementioned claims 7 to 9, the session management function (SMF) being configured to identify the user equipment (UE) and/or the data network (DN) by an internal identification data of the 3GPP virtual networks and/or by a Generic Public Subscription Identifier.

11. The node according to one of the aforementioned claims,
- the user equipment providing a User Equipment Route Selection Policy causing the user equipment to inspect an incoming frame and to determine handling and forwarding of the frame within the node in accordance with at least one Route Selection Policy Rule;
- the User Equipment Route Selection Policy including a route selection component instructing the user equipment to discard the frame; and;
- the user equipment being configured to receive an incoming frame, check an applicability of the route selection component for discarding the frame and, if applicable, discard the received incoming frame.
